(19) Europäisches Patentamt
European Patent Office
Office européen des brevets

(11) **EP 3 289 235 B1**

(12) **EUROPÄISCHE PATENTSCHRIFT**

(45) Veröffentlichungstag und Bekanntmachung des Hinweises auf die Patenterteilung:
**12.06.2019 Patentblatt 2019/24**

(21) Anmeldenummer: **16726477.9**

(22) Anmeldetag: **25.04.2016**

(51) Int Cl.:
***F16C 33/64*** *(2006.01)*

(86) Internationale Anmeldenummer:
**PCT/DE2016/200195**

(87) Internationale Veröffentlichungsnummer:
**WO 2016/173596 (03.11.2016 Gazette 2016/44)**

(54) **VERFAHREN ZUR HERSTELLUNG VON WÄLZLAGERRINGEN UND WÄLZLAGER**

METHOD FOR MANUFACTURING A BEARING RACEWAY RING AND ROLLING ELEMENT BEARING

PROCÉDÉ DE FABRICATION DE BAGUES DE ROULEMENT ET ROULEMENT

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **28.04.2015 DE 102015207779**

(43) Veröffentlichungstag der Anmeldung:
**07.03.2018 Patentblatt 2018/10**

(73) Patentinhaber: **Schaeffler Technologies AG & Co. KG**
**91074 Herzogenaurach (DE)**

(72) Erfinder:
• FELLA, Jens
  97469 Gochsheim (DE)
• BEER, Oskar
  84032 Landshut (DE)

(56) Entgegenhaltungen:
EP-A1- 2 759 729     US-A- 5 735 769
US-A1- 2005 160 602     US-B1- 6 655 026

**Beschreibung**

Die Erfindung bezieht sich auf ein Verfahren zur Behandlung von Wälzlagerringen, mit dem eine hohe Härte und lange Lebensdauer bewirkt wird. Hierbei werden Wälzlagerringe durch mechanisches Aufbringen von Druckeigenspannungen im Bereich der Laufbahn kaltverfestigt. Weiter bezieht sich die Erfindung auf Wälzlager mit derart hergestellten Wälzlagerringen.

Aus dem Stand der Technik ist bekannt, Druckeigenspannungen in Oberflächen durch Kugelstrahlen einzubringen. Allerdings hat sich das damit erzeugte Druckeigenspannungsprofil nur als bedingt geeignet für die Laufbahnen von Lagerringen erwiesen. Der Nachteil, Druckeigenspannungen durch Kugelstrahlen einzubringen, liegt unter anderem in der geringen Tiefe der damit eingebrachten Eigenspannungen von lediglich einigen Zehntel mm und in der Notwendigkeit, die Fertigung hierfür unterbrechen zu müssen, um jedes Bauteil separat zu behandeln. Dies bedeutet nicht nur Zeitverlust durch möglicherweise extern vergebene Arbeiten sondern vor allem auch eine Kostenerhöhung.

Druckeigenspannung in Kugeln, die mittels Trommelns oder mittels "Laser-Shot-Peening" als einem mechanischen "dynamischen" Eindringverfahren eingebracht werden, erhöhen den plastischen Verformungsgrad von so behandelten Wälzkörpern und können deren Lebensdauer steigern. Derartige Verfahren sind jedoch aufgrund der Geometrie nicht für Lagerringe geeignet oder im Falle des sogenannten Laser-Shot-Peening jedenfalls zu aufwändig und damit zu teuer.

Die EP 2 759 729 A1 beschreibt ein Verfahren zur Herstellung eines Wälzlagers, bei dem im Innenring durch Kaltverfestigen im Bereich der Laufbahn Druckeigenspannungen in der Randschicht ausgebildet werden. Der Innenring wird vor dem Kaltverfestigen einer Härtung und nach Abschluss der Wärmebehandlung einem Schleifprozess unterzogen. Zur Kaltverfestigung wird ausgeführt, dass man das Festwalzen in vielen Fällen gegenüber dem Kugelstrahlen den Vorzug geben wird. Beim Festwalzen wird ein anschließender Schleifabtrag als bestenfalls in geringem Maße erforderlich benannt.

Bekannt ist ferner ein Kaltverfestigungsprozess mittels eines Werkzeugs, mit dem der oberflächennahe Werkstoffbereich durch ein- oder mehrfaches Überrollen mit Profilrollen oder Walzen unter definierten Anpresskräften kontinuierlich plastisch verformt wird. Diese Vorgehensweise wird auch als Festwalzen bezeichnet. Bekannt ist hierfür beispielsweise ein Festwalzwerkzeug der Firma Ecoroll AG. Ein geeignetes Werkzeug umfasst mindestens einen Walzkörper (beispielsweise eine Keramik-Kugel), der hydrostatisch gelagert ist. Diese hydrostatische Konstruktion ist für die Lebensdauer des Walzkörpers entscheidend. Das Werkzeug ist so vorzugsweise konzipiert, dass es sowohl in konventionellen als auch in CNC gesteuerten Maschinen zum Einsatz kommen kann.

Ziel einer derartigen Kaltverfestigung ist bislang, der Entstehung und dem Wachstum eines Risses bei einer Biege-/Wechselbelastung entgegenzuwirken. Dabei wird der Kaltverfestigungsprozess an den betreffenden Bauteilen als Endbearbeitung vorgesehen. Eine anschließende gezielt auf die Bestimmung der Tiefe des Spannungsmaximums abgestimmte Endbearbeitung / Fertigschleifen ist nicht bekannt.

Zwar ist beispielsweise das Werkzeug der Firma Ecoroll AG und damit eine Form des Festwalzens bereits aus dem Stand der Technik bekannt. Allerdings sind hiermit nur Bauteile mit einfacher Geometrie bearbeitbar. Eine Behandlung von Lagerringen war hiermit bislang nicht entsprechend dem erfindungsgemäßen Verfahren vorgesehen, da die nachfolgend noch geschilderten Vorteile und Zusammenhänge dieses Verfahrens mit der Materialbeschaffenheit und spezifischen Materialbeanspruchung bei Lagerringen - insbesondere in Abhängigkeit von der Tiefe des Maximums der eingebrauchten Druckeigenspannung - nicht bekannt waren.

Durch die ständig steigenden Anforderungen an Triebwerkslager wie z.B. höhere Belastungen, höhere Lebensdauer, höherer Lagerzuverlässigkeit, höherer Geschwindigkeitsindex, wird das Wälzlagermaterial immer stärker beansprucht. Bei dem Geschwindigkeitsindex (n x dm) handelt es sich um ein Maß für die Umfangsgeschwindigkeit im Lager, wobei n die Drehzahl in [1/min] und dm den Teilkreisdurchmesser in [mm] bezeichnet. Je höher dieser Wert ist, um so besser müssen Design und Materialauswahl des Lagers aufeinander abgestimmt werden.

Ziel ist es daher, ein mechanisches Fertigungsverfahren aufzuzeigen, das leicht in den Fertigungsprozess integriert werden kann und mit dem die Leistungsfähigkeit von Wälzlagerstählen, speziell für (Wälz-)Lagerringe, gesteigert werden kann. Dabei soll das Material sowohl hinsichtlich der Lebensdauer als auch des Schadensfortschrittes verglichen mit dem Stand der Technik positiv beeinflusst werden.

Gelöst wird diese Aufgabe durch ein Verfahren nach Anspruch 1. Dabei werden auf mechanische Weise gezielt Druckeigenspannungen in das Material von Lagerringen eingebracht und dadurch das Potential des Materials wirkungsvoll ausgenutzt. Denn durch die eingebrachten mechanischen Druckeigenspannungen wird das Gesamtspannungsniveau der Vergleichsspannung während des Betriebs reduziert, und somit sowohl die Lebensdauer als auch die Leistungsfähigkeit des Lagers, bzw. des so behandelten Lagerrings, erhöht.

Unter der Vergleichsspannung wird ein Maß für die Materialbeanspruchung bei einem mehrachsigen Spannungszustand verstanden. Hierzu sei nachfolgend beispielhaft die sogenannte "Schubspannungshypothese" nach Tresca als Erklärung herangezogen:

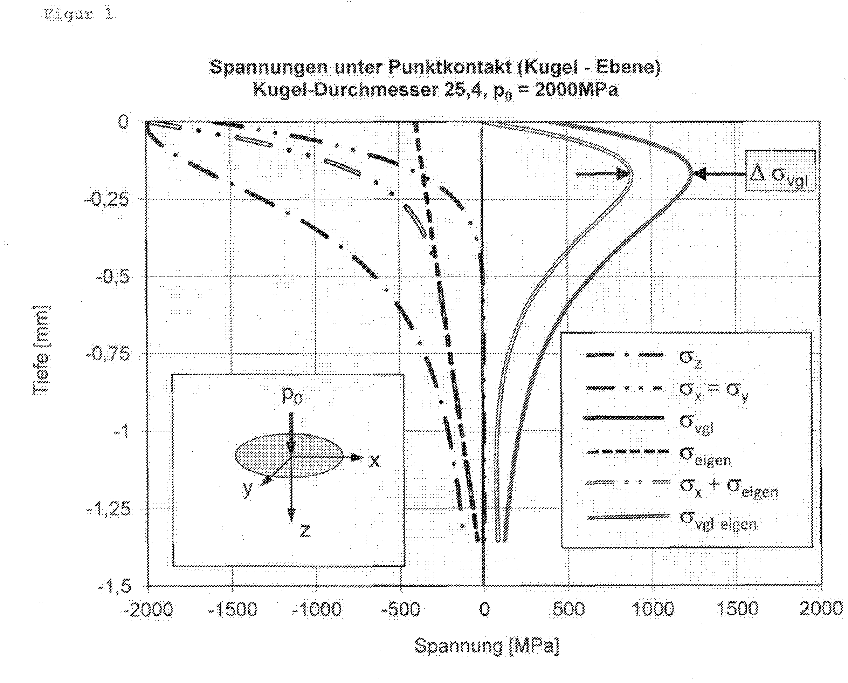

Fig.1 zeigt den Verlauf der Spannungen unter der Kontaktmitte für eine kreisförmige Kontaktfläche (Kugel-Ebene), p0 steht dabei für die Hertzsche Pressung. Die z-Richtung ist einwärts in das Material gerichtet, während die x- und y-Richtung parallel zur Oberfläche verlaufen.

Der Verlauf der Hauptspannung $\sigma_z$ (z-Richtung) ist in der linken Hälfte von Fig.1 als Strich-Punkt-Linie dargestellt, der Verlauf der Hauptspannungen $\sigma_x = \sigma_y$ (in x- bzw. y-Richtung, da wegen der Axialsymmetrie des Kontaktes beide Spannungen gleich groß sind) als Strich-Punkt-Punkt-Linie. Die Differenz der Spannungen $\sigma_z$ und $\sigma_x$ (größte und kleinste Hauptspannung) entspricht nach Tresca der Materialbeanspruchung $\sigma_{vgl}$ im Bild rechts als durchgezogene Linie dargestellt. Typisch für für den Hertz'schen Kontakt liegt das Maximum unterhalb der Oberfläche.

Es wird angenommen, dass Eigenspannungen nur in x- und y-Richtung wirken, was nicht nur durch Messungen bestätigt ist, sondern sich für die Oberfläche selbst auch aus Gleichgewichtsgründen erklärt. Die Eigenspannungen $\sigma_{eigen}$ sind in der linken Diagrammhälfte als gerade gestrichelte Linie dargestellt. Diese Eigenspannungen überlagern sich nun den Lastspannungen $\sigma_x$ und $\sigma_y$, was zu deren Verschiebung in Richtung $\sigma_z$ führt (dargestellt in der linken Diagrammhälfte als offene Strich-Punkt-Punkt-Linie). Damit ist der Abstand zwischen der Spannung $\sigma_z$ und den eigenspannungsüberlagerten Spannungen $\sigma_x$ und $\sigma_y$ kleiner, so dass sich auch die Vergleichsspannung verringert (dargestellt als durchgezogene Doppellinie in der rechten Diagrammhälfte, max. Verringerung der Vergleichsspannung dargestellt als $\Delta\sigma_{vgl}$).

Auch bei Betrachtung der Gestaltänderungsenergiehypothese nach v. Mises kommt man zu ähnlichen Ergebnissen.

Aufbauend auf diesen Erkenntnissen umfasst das erfindungsgemäße Behandlungs- bzw. Herstellungsverfahren folgende Schritte:
Zunächst werden die Lagerringe (Innen- und/oder Außenringe) gefertigt, beispielsweise geschmiedet oder gedreht, und anschließend gehärtet. Es folgt ein Schleifen der Lagerringe auf ein vorab bestimmtes sogenanntes Vorschleifmaß.

Hieran schließt sich ein Kaltverfestigen der Oberflächen der Lagerringe mittels eines kontinuierlichen plastischen Verformungsprozesses an. Mit diesem Kaltverfestigungsprozess wird ein definierter Druckeigenspannungszustand im Bereich der Laufbahn erzeugt, um wie oben erläutert, die Lastspannung zu überlagern. Die wichtigsten Kenngrößen beim definierten Einbringen sind Walzkraft, Vorschub und Walzkugeldurchmesser des Werkzeugs. Die so erzeugte Druckeigenspannung überlagert im Betrieb die Rollbeanspruchung aus der Hertz'schen Beanspruchung und führt zu einem insgesamt niedrigeren Gesamtbeanspruchungsniveau. Damit wird die Lebensdauer erhöht und ein möglicher Schadensfortschritt vermindert.

Anschließend erfolgt eine Fertigbearbeitung in Abhängigkeit der Erkenntnis, dass der Durchmesser der Walze und deren Anpressdruck Einfluss auf die Tiefe der maximalen Druckeigenspannung haben und diese wiederum einer Kombination mit einem spezifisch zu bestimmenden Schleifabtrag erfordern, um die Überrollfestigkeit deutlich zu erhöhen und das Schadensfortschrittsverhaiten zu verbessern.

Abgetragen wird dafür eine Oberflächenschicht, deren Dicke typischerweise größer ist als die Tiefe der eingebrachten maximalen Druckeigenspannung.

Anschließend erfolgt fallweise eine Prüfung der so gefertigten Lagerringe.

Das erfindungsgemäße Herstellungsverfahren hat mehrere Vorteile: Es entstehen keine hohen Anschaffungskosten durch zusätzliche Maschinen, Die Tiefe der maximalen Druckeigenspannung kann durch eine geeignete Wahl des Walzkugeldurchmessers eingestellt werden. Bei einer relativ kurzen Dauer des Festwalzens liefert dieser Verfahrensschritt leicht reproduzierbare Ergebnisse. Ein weiterer positiver Effekt besteht darin, dass zusätzlich die Rauhigkeitswerte verbessert werden.

Verglichen mit anderen Fertigungsverfahren wie z.B. dem Kugelstrahlen, das zum Einbringen von Druckeigenspannungen auch verwendet werden könnte, unterscheiden sich das erfindungsgemäße Verfahren hinsichtlich des erzeugten Druckeigenspannungsprofils. Beim Festwalzen liegt das Maximum der Druckeigenspannung tiefer unter der Werkstückoberfläche als beim Kugelstrahlen. Die maximale Tiefe der maximalen Druckeigenspannungen liegen beim Kugelstrahlen bei etwa 50 bis $100\,\mu m$ unter der Oberfläche. Hingegen liegt die Tiefe der maximalen Druckeigenspannung von Bauteilen, die festgewalzt wurden, bei mehreren zehntel Millimetern, was für einen Einsatz im Wälzlagerbereich zum Vorteil ist.

In einem Ausführungsbeispiel wird für den Festwalzprozess eine Kugel aus einer Keramik (hier: $Si_3N_4$) verwendet. Sie wird mit dem (Hydraulik-)Druck $p_\rho$ auf die Werkstückoberfläche gepresst. Wegen der in der Berührungszone auftretenden Flächenpressung in den oberflächennahen Bereichen des zu bearbeitenden Werkstücks stellt sich der oben erläuterte dreiachsige Spannungszustand ein. Die Beträge der auftretenden Hauptspannungen sind vom Anpressdruck und von dem Kugeldurchmesser $D_w$ abhängig. Sobald die Vergleichsspannung im Wälzkontakt die Elastizitätsgrenze des Werkstücks überschreitet, treten lokale plastische Deformationen und somit Druckeigenspannungen auf. Die Tiefe der maximal resultierenden Druckeigenspannung wird annähernd der Tiefe der maximalen Vergleichsspannung entsprechen, da an diesem Ort die größte plastische Umformung stattfindet.

Der Walzdurchmesser hat dabei Einfluss auf die Tiefe der maximalen Druckeigenspannung, der sich entsprechend folgender Gleichung ergibt:

$$t_{ES,0} = D_W \cdot \left( \frac{t_{ES,max}}{D_W} + \frac{\Delta\sigma_{vgl.}}{p_0 \cdot 6,744} \right)$$

Die maximale Tiefe der Druckeigenspannung liegt in diesem Beispiel bei 150pm.

## Patentansprüche

1. Verfahren zur Herstellung eines Wälzlagerrings, **gekennzeichnet durch** die folgenden Schritte:

   - Fertigen eines Lagerrings in einem Ausgangszustand
   - Härten des Lagerrings
   - Schleifen des Lagerrings auf ein vorab bestimmtes Vorschleifmaß Walzen der Laufbahn des Lagerrings mit einem Walzkörper mit vorbestimmter Walzkraft, Vorschub und Durchmesser
   - Materialabtrag der behandelten Oberfläche mit einer Schichtdicke, die größer ist als die Tiefe der durch das Walzen eingebrachten maximalen Druckeigenspannung.

2. Wälzlager umfassend mindestens einen Wälzlagerring, der nach dem Verfahren gemäß Anspruch 1 gefertigt ist.

## Claims

1. Method for producing a rolling bearing ring, **characterized by** the following steps:

   - producing a bearing ring in an initial state
   - hardening the bearing ring
   - grinding the bearing ring to a predetermined rough grinding dimension
   - rolling the race of the bearing ring by means of a rolling element with a predetermined rolling force, feed rate and diameter
   - removing material from the treated surface with a layer thickness which is greater than the depth of the maximum residual compressive stress introduced by the rolling.

2. Rolling bearing comprising at least one rolling bearing ring, which is produced by the method according to Claim 1.

## Revendications

1. Procédé de fabrication d'une bague de palier à roulement, **caractérisé par** les étapes suivantes :

   - fabrication d'une bague de palier dans un état initial,
   - durcissement de la bague de palier,
   - meulage de la bague de palier à un degré de pré-meulage déterminé au préalable,
   - laminage de la bande de roulement de la bague de palier avec un corps de roulement avec une force de laminage, une avance et un diamètre prédéterminés,
   - enlèvement de matière de la surface traitée avec une épaisseur de couche qui est supérieure à la profondeur de la tension propre de compression maximale introduite par le laminage.

2. Palier à roulement comprenant au moins une bague de palier à roulement fabriquée selon le procédé de la revendication 1.

Figur 1

Spannungen unter Punktkontakt (Kugel - Ebene)
Kugel-Durchmesser 25,4, $p_0$ = 2000MPa

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2759729 A1